# EUROPEAN PATENT APPLICATION

(11) **EP 2 605 579 A1**
(43) Date of publication of application: **19.06.2013**
(21) Application number: 10855787.7
(22) Date of filing: 13.08.2010
(51) Int. Cl.: H04W 28/16

(54) **BASE STATION ON THE BASIS OF ORTHOGONAL FREQUENCY DIVISION MULTIPLEXING SCHEME AND INTERFERENCE COORDINATION METHOD THEREOF**

(71) Applicant: Fujitsu Limited, Kawasaki-shi, Kanagawa 211-8588 (JP)
(72) Inventor: ZHANG, Yi, Beijing 100025 (CN); ZHANG, Yuantao, Beijing 100025 (CN); ZHOU, Hua, Beijing 100025 (CN); WANG, Yi, Beijing 100025 (CN); WU, Jianming, Beijing 100025 (CN)
(74) Representative: Stebbing, Timothy Charles
(86) International application number: PCT/CN2010/075991
(87) International publication number: WO 2012/019366

(57) **Abstract**

A base station on the basis of orthogonal frequency division multiplexing solution and an interference coordination method thereof are provided. The base station can include an interference estimation unit, which estimates the interference state of each physical resource block according to the feedback information from the user equipment, and in the condition that the interference of the physical resource block is greater than or equal to a first threshold and less than or equal to a second threshold which is greater than the first threshold, the interference of the physical resource block is estimated as medium interference state. The base station can also include an interference coordination request unit, which at least responses the medium interference state estimation to transmit the interference coordination request to one or a plurality of predetermined base stations, wherein said interference coordination request includes the information for indicating the interference state of said physical resource block.

## Description

### FIELD OF THE INVENTION

The disclosure relates to wireless communication technologies, and in particular to a base station based on an orthogonal frequency division multiplexing (OFDM) scheme and an interference coordination method thereof.

### BACKGROUND OF THE INVENTION

In the wireless communication systems based on OFDM schemes, smaller cells may exist in larger cells. These cells can share the common frequency resources. For example, in the next generation wireless communication system Advanced Long Term Evolution schemes (LTE-Advanced), Heterogeneous Networks have been introduced. LTE-A systems may comprise Macro Cells, Femto Cells, Pico Cells, Remote Radio Heads (RRH), Relays, and the like. LTE-A systems may improve the system capacity by deploying new wireless nodes, provide better services for the users located in special regions, optimize the system performances, and the like.

On the other hand, the new deployed nodes may cause interference to the users in the cells previously deployed. Therefore, there is a need for an enhanced Inter-cell Interference Coordination (eICIC) method to further improve systems performances.

The next generation wireless communication system Advanced Long Term Evolution schemes (LTE) employ Fractional Frequency Reuse (FFR). According to FFR, it is possible to schedule all the frequency resources for the center users, and to limitedly schedule the un-overlapped portions of the frequency resources for the edge users of different cells.

### SUMMARY OF THE INVENTION

An embodiment of the disclosure is a base station based on an orthogonal frequency division multiplexing scheme. The base station may comprise an interference evaluation unit and an interference coordination request unit. The interference evaluation unit may evaluate interference condition of respective physical resource units according to information fed back from a user equipment, wherein interference on a physical resource unit is evaluated at a moderate interference condition if the interference on the physical resource unit is greater than or equal to a first threshold and is less than or equal to a second threshold higher than the first threshold. The interference coordination request unit may transmit an interference coordination request to one or more predetermined base stations in response to at least the evaluation at the moderate interference condition. The interference coordination request may include information indicative of the interference condition on the physical resource unit.

An embodiment of the disclosure is a wireless communication system comprising at least one user equipment and at least one base station as described above.

An embodiment of the disclosure is a base station based on an orthogonal frequency division multiplexing scheme. The base station may comprise a reception unit and a power adjustment unit. The reception unit may receive interference coordination requests from one or more predetermined base stations. The interference coordination requests may include information indicative of interference condition on respective physical resource units as evaluated by the base station which the interference coordination requests come from. The power adjustment unit may reduce the transmission power on a physical resource unit if the information indicates the physical resource unit at the moderate interference condition.

An embodiment of the disclosure is an interference coordination method in a base station based on an orthogonal frequency division multiplexing scheme. According to the method, the interference condition of respective physical resource units may be evaluated according to information fed back from a user equipment, wherein interference on a physical resource unit is evaluated at a moderate interference condition if the interference on the physical resource unit is greater than or equal to a first threshold and is less than or equal to a second threshold higher than the first threshold. In addition, an interference coordination request may be transmitted to one or more predetermined base stations in response to at least the evaluation at the moderate interference condition. The interference coordination request may include information indicative of the interference condition on the physical resource unit.

An embodiment of the disclosure is an interference coordination method in a base station based on an orthogonal frequency division multiplexing scheme. According to the method, interference coordination requests from one or more predetermined base stations may be received. The interference coordination requests may include information indicative of interference condition on respective physical resource units as evaluated by the base station which the interference coordination requests come from. In addition, the transmission power on a physical resource unit may be reduced if the information indicates the physical resource unit at the moderate interference condition.

### BRIEF DESCRIPTION OF THE DRAWINGS

The above and other objectives, features, and advantages of the disclosure may be more readily understood with reference to the following description when taken in conjunction with the accompanying drawings. In the accompanying drawings, the same or corresponding reference numerals represent the same or corresponding technical features or components.

Figure 1 illustrates an example scene which needs interference coordination.

Figure 2 illustrates another example scene which needs interference coordination.

Figure 3 is a block diagram illustrating an example structure of a base station based on an orthogonal frequency division multiplexing scheme according to an embodiment of the disclosure.

Figure 4 is a block diagram illustrating an example structure of a base station based on an orthogonal frequency division multiplexing scheme according to an embodiment of the disclosure.

Figure 5 is a flow chart illustrating an interference coordination method in a base station based on an orthogonal frequency division multiplexing scheme according to an embodiment of the disclosure.

Figure 6 is a flow chart illustrating an interference coordination method in a base station based on an orthogonal frequency division multiplexing scheme according to an embodiment of the disclosure.

Figure 7 is a block diagram illustrating an example structure of a base station based on an orthogonal frequency division multiplexing scheme according to an embodiment of the disclosure.

Figure 8 illustrates in a schematic diagram a case that base stations multiplex the indicated physical resource units at the high interference condition in a time-division manner.

Figure 9 is a flow chart illustrating an interference coordination method in a base station based on an orthogonal frequency division multiplexing scheme according to an embodiment of the disclosure.

Figure 10 is a block diagram illustrating structure of a user equipment.

Figure 11 is a block diagram illustrating an example structure of a computer that may implement the apparatus and method of the disclosure.

### EMBODIMENTS OF THE INVENTION

Exemplary embodiments of the disclosure will be described with reference to the accompanying drawings hereinafter. It should be noted that for the sake of clarity the illustration and description of the components and processes which do not relate to the disclosure and are known to those skilled in the art have been omitted in the drawings and description.

In LTE-A systems, various cells may be deployed together flexibly, which may cause inter-cell interference.

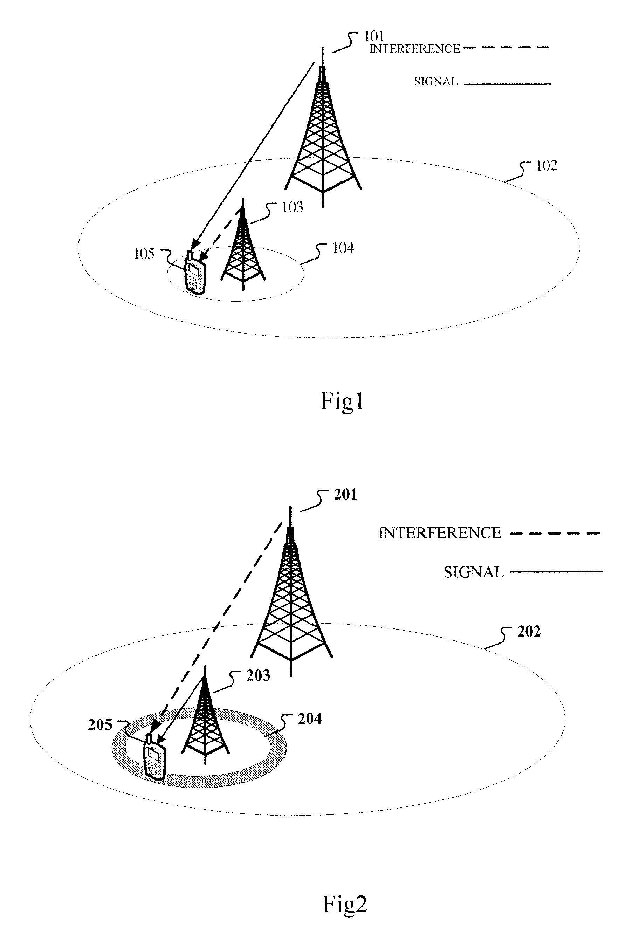

Figure 1 illustrates an example scene which needs interference coordination, in which interference is formed by femto cells to macro cells. As shown in Figure 1, a macro base station 101 serves a macro cell 102. In the cell 102, a femto base station 103 serves a femto cell 104. The femto cell 104 serves a user equipment group that has subscribed it. The macro cell 102 serves all the user equipments. When a user equipment 105 served by the macro cell 102 enters the femto cell 104, if the user equipment 105 belongs to the user equipment group that subscribed the femto cell 104, it may hand over to the femto cell 104 to accept the service of the femto cell 104. If it does not belong to the user equipment group that subscribed the femto cell 104, it will be subjected to strong interference of the channels of the same transmission resources occupied by the femto cell 104. Specifically, the downlink channels of the femto cell 104 produce interference on the downlink channels of the macro cell 102. Therefore, there is a need for interference coordination with regard to the femto cell 104 and the macro cell 102.

Figure 2 illustrates another example scene which needs interference coordination, in which interference is formed by macro cells to pico cells. As shown in Figure 2, a macro base station 201 serves a macro cell 202. In the cell 202, a pico base station 203 serves a pico cell 204. The pico cell 204 employs service Range Expansion technology in order to increase the system capacity. In the case of employing service Range Expansion technology, a user equipment 205 which subscribes to the pico cell 204 and is located at its edge may be subjected to larger interference by the macro cell 202. Specifically, the downlink channels of the macro cell 202 produce interference on the downlink channels of the pico cell 204. Therefore, there is a need for interference coordination with regard to the macro cell and the pico cell.

Although the cases that interference occurs between two cells have been described in above examples, it can be appreciated by those skilled in the art that there are also cases that two or more cells produce interference on the same cell, for example, two or more pico cells producing interference on the same macro cell, a macro cell and a pico cell producing interference on the same femto cell, and the like.

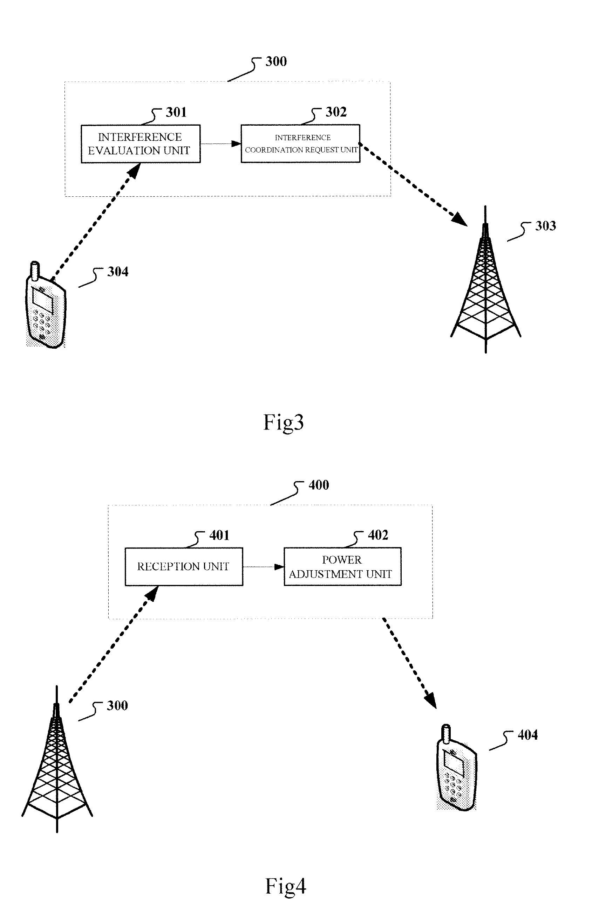

Figure 3 is a block diagram illustrating an example structure of a base station 300 based on an orthogonal frequency division multiplexing scheme according to an embodiment of the disclosure.

As shown in Figure 3, the base station 300 includes an interference evaluation unit 301 and an interference coordination request unit 302.

The interference evaluation unit 301 evaluates interference condition of respective physical resource units according to information fed back from a user equipment, for example, a user equipment 304. Interference on a physical resource unit may be measured by using various known interference indicators. The user equipment may feed back corresponding feed back information for interference evaluation. For example, if the interference is measured with a signal intensity indicator such as carrier-interference (C/I) ratio and signal-noise ratio, the interference may be evaluated according to the reference signal reception power and the reference signal transmission power fed back by the user equipment. Moreover, for example, if the interference is measured with the channel quality, the interference may be evaluated according to the channel quality information fed back by the user equipment.

The interference evaluation unit 301 may evaluate interference condition according to the magnitude of interference on a physical resource unit. Specifically, a first threshold and a second threshold higher than the first threshold may be set. Interference on a physical resource unit is evaluated at a moderate interference condition by the interference evaluation unit 301 if the interference on the physical resource unit is greater than or equal to a first threshold and is less than or equal to a second threshold higher than the first threshold.

The interference coordination request unit 302 transmits an interference coordination request to one or more predetermined base stations, for example, a base station 303, in response to the evaluation at the moderate interference condition. The interference coordination request may include information indicative of the interference condition, i.e., the moderate interference condition, on the physical resource unit. Although only one base station 303 is shown in Figure 3 which produces interference, there may be more than one base station as a potential interference source according to specific cell configuration of wireless communication system. As for each base station, one or more predetermined base stations may be set as potential interference sources according to cell configuration. When there is a need for interference coordination, the base station may transmit an interference coordination request to such one or more predetermined base stations.

In a further embodiment, the interference evaluation unit 301 may also evaluate other interference condition. For example, interference on a physical resource unit may be evaluated at a low interference condition by the interference evaluation unit 301 if the interference on the physical resource unit is less than the first threshold. Moreover, for example, interference on a physical resource unit may be evaluated at a high interference condition by the interference evaluation unit 301 if the interference on the physical resource unit is greater than the second threshold. Correspondingly, the interference coordination request may include information indicative of the low interference condition on the physical resource unit, or information indicative of the high interference condition on the physical resource unit, or both.

The interference coordination request unit 302 may evaluate periodically or in response to reception of feed back of a user equipment. The interference coordination request unit 302 may also transmit an interference coordination request periodically or in response to the evaluation at the high interference condition. In the case of periodically transmitting, the transmitting period of the interference coordination request is determined by the physical transmission medium between base stations and system delay. For example, if an X2 interface is employed to transmit an interference coordination request, the update time is more than 20 ms.

If the base station which receives an interference coordination request finds that there is no need for interference coordination, such as all the physical recourse units are at low interference condition, the interference coordination process may not be executed.

As can be seen, Figure 3 illustrate a wireless communication system, comprising at least on user equipment such as the user equipment 304 and at least one base station such as base station 300.

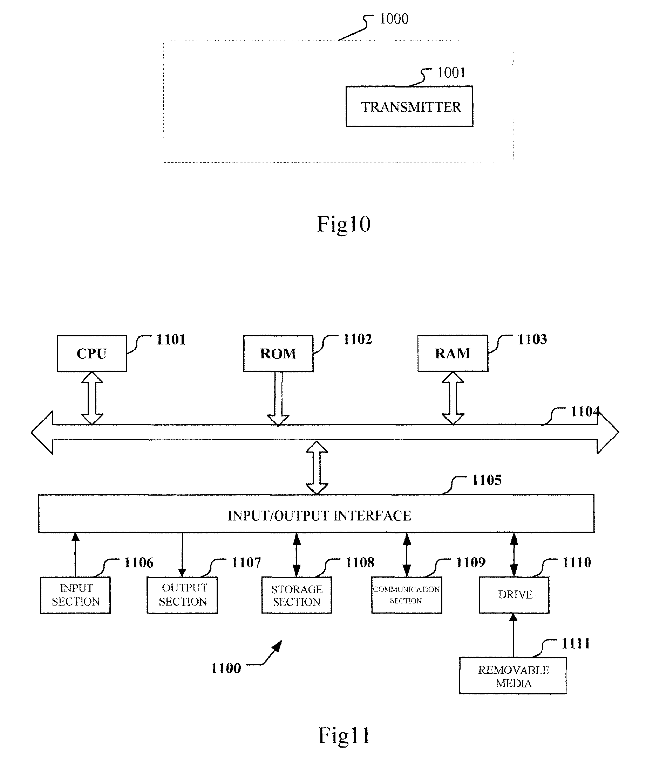

Further, a user equipment in a wireless communication system may be configured to be a transmitter for transmitting information about interference. The user equipment may obtain the information about interference by measuring downlink channel, so that the information may be fed back to a base station through the transmitter. Figure 10 illustrate an example of structure of a user equipment. As shown in Figure 10, a user equipment 1000 includes a transmitter 1001 for transmitting information about interference.

Figure 4 is a block diagram illustrating an example structure of a base station based on an orthogonal frequency division multiplexing scheme according to an embodiment of the disclosure.

As shown in Figure 4, a base station 400 comprises a reception unit 401 and a power adjustment unit 402.

The reception unit 401 receives interference coordination requests from one or more predetermined base stations, for example, the base station 300. As described with reference to Figure 3, the interference coordination requests may include information indicative of interference condition on respective physical resource units as evaluated by the base station, for example, the base station 300, which the interference coordination requests come from.

The power adjustment unit 402 reduces the transmission power on a physical resource unit if the information indicates the physical resource unit at the moderate interference condition.

For example, the base stations 300 and 400 respectively transmit on downlink to the user equipments 304 and 404 which they serve respectively through common physical resource unit. An interference coordination request including information indicative of moderate interference condition on a physical resource unit is transmitted to the base station 400 if the base station 300 detects the moderate interference condition on the physical resource unit. The base station 400 receives the interference coordination request and correspondingly reduces the transmission power on the physical resource unit indicated by the interference coordination request. Thus the interference on the downlink transmission from the base station 300 to the user equipment 304 may be reduced, while no large influence will produced on the quality of the downlink transmission from the base station 400 to the user equipment 404. In this regard, the complicated operation, for example, re-scheduling physical resource unit, can be avoid.

In a specific implementation of wireless communication system, the base station 300 may be a base station of a cell being interfered, and the base station 400 may be a base station of a cell interfering. For example, in the scene shown in Figure 1, the base station 300 may be the base station 101 of the macro cell 102, and the base station 400 may be the base station 103 of the femto cell 104. For example, in the scene shown in Figure 2, the base station 300 may be the base station 203 of the pico cell 204, and the base station 400 may be the base station 201 of the macro cell 202. Of course, the base station may also be configured to be a combination of the base stations 300 and 400.

Although only one base station 300 is shown in Figure 4 which transmits an interference coordination request, there may be more than one base station which is interfered by the base station 400 according to specific cell configuration of wireless communication system. As for each base station, one or more predetermined base stations may be set as potential base stations of cells being interfered according to cell configuration. Base stations may receive interference coordination requests from such one or more predetermined base stations.

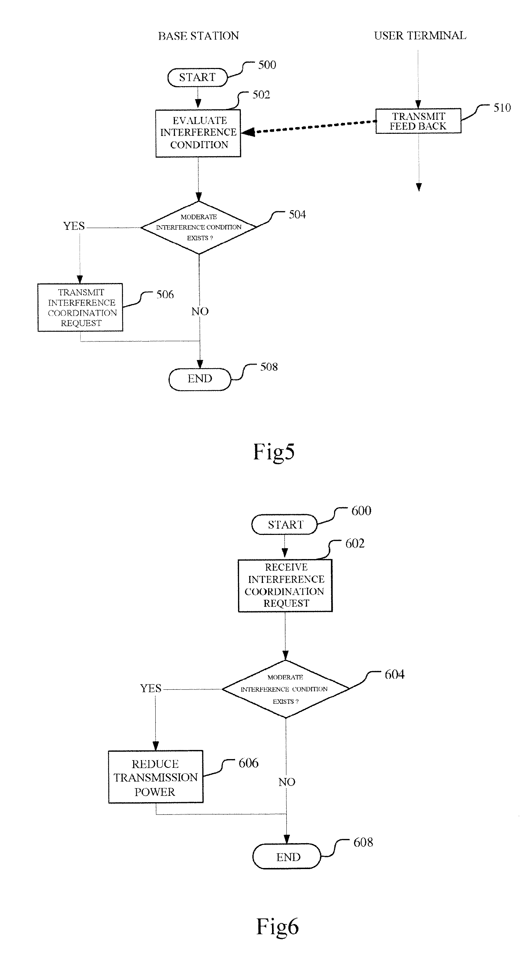

Figure 5 is a flow chart illustrating an interference coordination method in a base station based on an orthogonal frequency division multiplexing scheme according to an embodiment of the disclosure.

As shown in Figure 5, the method starts at step 500. At step 502, interference condition of respective physical resource units is evaluated according to information fed back from a user equipment, wherein interference on a physical resource unit is evaluated at a moderate interference condition if the interference on the physical resource unit is greater than or equal to a first threshold and is less than or equal to a second threshold higher than the first threshold.

At step 504, it is determined whether a physical resource unit evaluated at a moderate interference condition exists. If not, the method ends at step 508. If a physical resource unit evaluated at a moderate interference condition exists, the method proceeds to step 506.

At step 506, an interference coordination request is transmitted to one or more predetermined base stations in response to the evaluation at the moderate interference condition. The interference coordination request includes information indicative of the interference condition on the physical resource unit. Then the method ends at step 508. There may be one or more base stations as potential interference sources according to specific cell configuration of wireless communication system. As for each base station, one or more predetermined base stations may be set as potential interference sources according to cell configuration. When there is a need for interference coordination, the base station may transmit an interference coordination request to such one or more predetermined base stations.

In addition or alternatively, at step 510, a user equipment may transmit information about interference. The user equipment may obtain the information about interference by measuring downlink channel, so that the information may be fed back to a base station.

Figure 6 is a flow chart illustrating an interference coordination method in a base station based on an orthogonal frequency division multiplexing scheme according to an embodiment of the disclosure.

As shown in Figure 6, the method starts at step 600. At step 602, interference coordination requests from one or more predetermined base stations are received. The interference coordination requests include information indicative of interference condition on respective physical resource units as evaluated by the base station which the interference coordination requests come from.

At step 604, it is determined whether the interference coordination requests include information indicative of a physical resource unit at a moderate interference condition. If not, the method ends at step 608. If so, the method proceeds to step 606.

At step 606, the transmission power on a physical resource unit is reduced. Then the method ends at step 608.

In a further embodiment, other interference condition may be evaluated. For example, interference on a physical resource unit may be evaluated at a low interference condition if the interference on the physical resource unit is less than the first threshold. Moreover, for example, interference on a physical resource unit may be evaluated at a high interference condition if the interference on the physical resource unit is greater than the second threshold. Correspondingly, the interference coordination request may include information indicative of the low interference condition on the physical resource unit, or information indicative of the high interference condition on the physical resource unit, or both.

The evaluation may be executed periodically or in response to reception of feed back of a user equipment. An interference coordination request may also transmitted periodically or in response to the evaluation at the high interference condition. In the case of periodically transmitting, the transmitting period of the interference coordination request is determined by the physical transmission medium between base stations and system delay. For example, if an X2 interface is employed to transmit an interference coordination request, the update time is more than 20 ms.

As for the received interference coordination requests, if it is found that there is no need for interference coordination, such as all the physical recourse units are at low interference condition, the interference coordination process may not be executed.

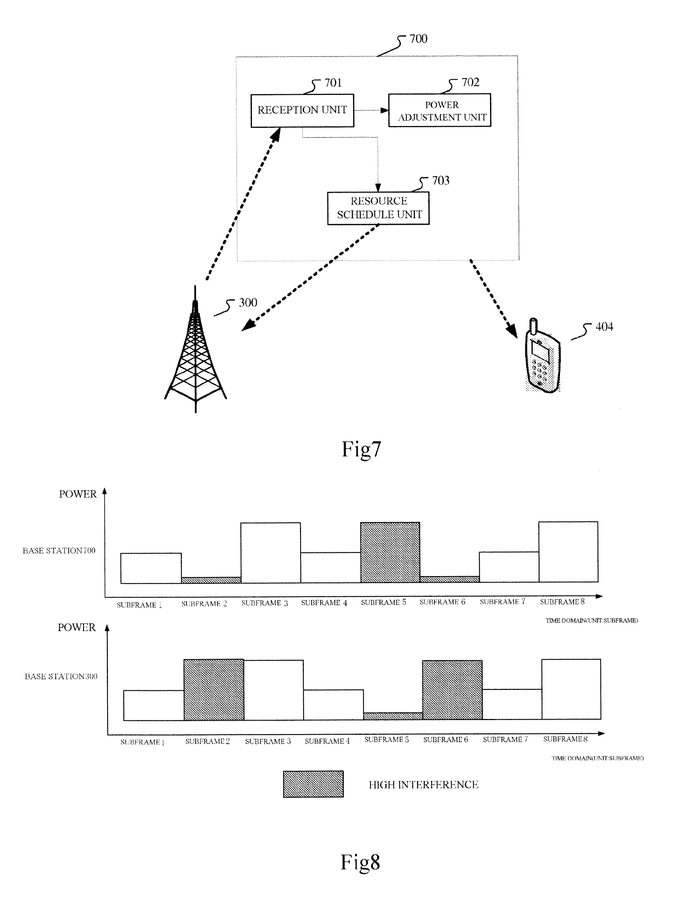

Figure 7 is a block diagram illustrating an example structure of a base station 700 based on an orthogonal frequency division multiplexing scheme according to an embodiment of the disclosure.

As shown in Figure 7, the base station 700 comprise a reception unit 701, a power adjustment unit 702, and a resource schedule unit 703. The reception unit 701 and the power adjustment unit 702 have the same functions as those of the reception unit 401 and the power adjustment unit 302 described with reference to Figure 4, and thus the detailed description thereof is omitted.

The resource schedule unit 703, in case that the information included in an interference coordination request indicates a physical resource unit at a high interference condition, makes a schedule so that the base station 700 and the base station which the corresponding interference coordination request comes from, for example, the base station 300 multiplex the indicated physical resource unit in a time-division manner. Specifically, subframes on time domain are mapped to the indicated physical resource units at the high interference condition. Different subframes on time domain may be allocated to the base station which transmits the interference coordination request (for example, the base station 300) and the base station which receives the interference coordination request (for example, the base station 700). There may be various manners of subframe allocation. For example, the odd/even subframes may be allocated to one base station, and the even/odd subframes may be allocated to the other base station. In addition, the subframes may be divided into periods. In each period, the subframes are allocated according to predetermined allocation proportion and allocation mode. The allocation proportion refers to a ratio between the number of the subframes allocated to one base station and the number of the subframes allocated to the other base station. The allocation proportion may be fixed, or be set by the entity in core network which is responsible for setting the configuration information of cells (for example, macro cells, pico cells, femto cells) in heterogeneous network in initializing the system configuration. In a practical implementation, the allocation proportion may be specified as needed, for example, 1:1, 1:2, ..., 1:9, 2:3, and the like. The allocation mode refers to the manner that which subframes in a period shall be allocated to one base station, and which subframes in the period shall be allocated to the other base station.

The schematic diagram of Figure 8 illustrates a case that the base station 700 and the base station 300 multiplex the indicated physical resource units at the high interference condition in a time-division manner.

In the situation as shown in Figure 8, the information included in an interference coordination request indicates that a physical resource unit to which subframes 2, 5, 7 map is at a high interference condition. The resource schedule unit 703 allocates even subframes to the base station 300, and allocates odd subframes to the base station 700. The resource schedule unit 703 may notify the section which executes resource schedule (not shown) of allocation information, so that the downlink communication between the base station 700 and the user equipment 400 does not use the subframes which are not allocated to it. In addition, the resource schedule unit 703 also notify the section which executes resource schedule in the base station 300 (not shown), so that the downlink communication between the base station 300 and the user equipment 304 does not use the subframes which are not allocated to it.

In general, interference condition on a user equipment changes slowly. Resources may be scheduled on a wider bandwidth by using the manner of time-division, thereby obtaining a larger frequency schedule gain.

Although two base stations multiplex the indicated physical resource unit at the high interference condition in a time-division manner in the example described in conjunction with Figure 7 and Figure 8, if a base station receives interference coordination requests from more than one predetermined base station and the information included in those interference coordination requests all indicate the same physical resource unit is at the high interference condition, the resource schedule unit 703 may also make a schedule, so that the indicated physical resource unit at the high interference condition may be multiplexed between the base station 400 and these base stations in a time-division manner. Correspondingly, the allocation mode and the allocation proportion on which the allocation is based also relate to more than two base stations.

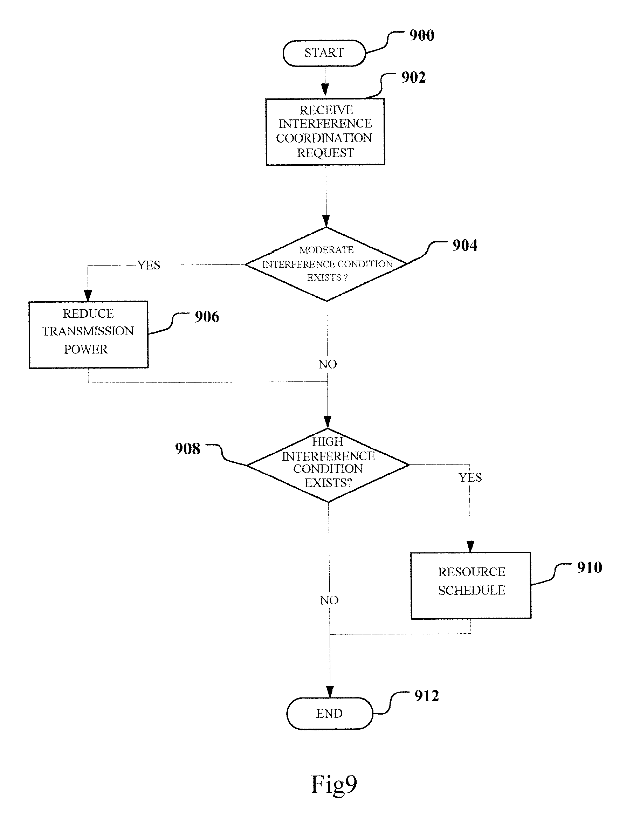

Figure 9 is a flow chart illustrating an interference coordination method in a base station based on an orthogonal frequency division multiplexing scheme according to an embodiment of the disclosure.

As shown in Figure 9, the method starts at step 900. At step 902, interference coordination requests from one or more predetermined base stations are received. The interference coordination requests include information indicative of interference condition on respective physical resource units as evaluated by the base station which the interference coordination requests come from.

At step 904, it is determined whether the interference coordination requests include information indicative of a physical resource unit at a moderate interference condition. If not, the method ends at step 908. If so, the method proceeds to step 906.

At step 906, the transmission power on a physical resource unit is reduced. Then the method ends at step 908.

At step 908, it is determined whether the interference coordination requests include information indicative of a physical resource unit at a high interference condition. If not, the method ends at step 912. If so, the method proceeds to step 910.

At step 910, a schedule is made so that the base station which receives the interference coordination requests and the base stations which the corresponding interference coordination requests come from multiplex the indicated physical resource unit at the high interference condition in a time-division manner. Specifically, subframes on time domain are mapped to the indicated physical resource units at the high interference condition. Different subframes on time domain may be allocated to the base station which transmits the interference coordination request and the base station which receives the interference coordination request. There may be various manners of subframe allocation. For example, the odd/even subframes may be allocated to one base station, and the even/odd subframes may be allocated to the other base station. In addition, the subframes may be divided into periods. In each period, the subframes are allocated according to predetermined allocation proportion and allocation mode. The allocation proportion refers to a ratio between the number of the subframes allocated to one base station and the number of the subframes allocated to the other base station. In a practical implementation, the allocation proportion may be specified as needed, for example, 1:1, 1:2, ..., 1:9, 2:3, and the like. The allocation mode refers to the manner that which subframes in a period shall be allocated to one base station, and which subframes in the period shall be allocated to the other base station. Then the method ends at step 912.

Although the decision of step 904 is executed before the decision of step 908, the decision of step 904 may also be executed after the decision of step 908.

Although two base stations multiplex the indicated physical resource unit at the high interference condition in a time-division manner in the example described in conjunction with Figure 9, if a base station receives interference coordination requests from more than one predetermined base station and the information included in those interference coordination requests all indicate the same physical resource unit is at the high interference condition, schedule may also be made, so that the indicated physical resource unit at the high interference condition may be multiplexed between the base station which receives the interference coordination requests and these predetermined base stations in a time-division manner. Correspondingly, the allocation mode and the allocation proportion on which the allocation is based also relate to more than two base stations.

In the embodiments of the above described base station and method, the transmission power may be reduced in a predetermined adjustment amount (step), a difference between the power before adjustment and the power after adjustment. For example, the step may be 1dB, 3dB.

In a further embodiment of the above described base station and method, the interference coordination requests may further include adjustment information associated with the physical resource unit at the moderate interference condition. The adjustment information indicates an associated power adjustment amount. The power adjustment amount may define a step. The power adjustment amount may define an adjustment proportion, such as a ratio between the power after adjustment and the power before adjustment. The adjustment proportion may be a fixed proportion, for example, 1/2, 1/3, and the like.

In a practical implementation, the power adjustment amount may be a bit string of fixed length (n bits). The bit strings of different values correspond to different adjustment proportions. Table 1 lists the correspondence between the values of the bit strings and the adjustment proportions.

**Table 1. The correspondence between the values of the bit strings and the adjustment proportions.**

| Bit Strings | Power After Adjustment(a+1)P/(2n+1) (The power before adjustment is P) |
|---|---|
| 00...00 | 1P/(2n+1) |
| 00...01 | 2P/(2n+1) |
| 00...10 | 3P/(2n+1) |
| ... | ... |
| 11...11 | (2n)P/(2n+1) |

The base stations which transmit the interference coordination requests may decide the power adjustment amount according to the present interference intensity. If the interference intensity is larger, a power adjustment amount which can reduce the transmission power rapidly may be employed. If the interference intensity is not large, a power adjustment amount which can reduce the transmission power slowly may be employed.

The interference coordination requests may be transmitted between base stations through various communication means. For example, the transmission may be executed in a wireline (for example, electrical cable, optical fiber, etc.) or wireless (for example, microwave, satellite, etc.) manner. For example, the transmission may be executed through a dedicated link or network. In a example implementation, the transmission may be executed through interfaces such as X2, S1, air interface, and the like.

The format of the interference coordination request may conform to the requirements of the specific protocols used. In a practical implementation, the interference coordination request may comprise a relative narrowband transmission power (RNTP) value relating to a physical resource unit, wherein when the RNTP value is a certain value, it indicates that the related physical resource unit is at the moderate interference condition. In case of allowing to indicate the high interference condition, the moderate interference condition and the low interference condition, the RNTP value may be indicated with two or four bits. For example, the RNTP value of 2, 1 and 0 indicates the high interference condition, the moderate interference condition and the low interference condition respectively.

Although the embodiments of the disclosure are illustrated above in conjunction with the inter-cell interference in heterogeneous networks in LTE-A system, the embodiments of the disclosure may be applied to the wireless communication systems such as Worldwide Interoperability for Microwave Access (WiMAX) and the like.

The embodiments of the disclosure are compatible with LTE-A Rel.8/9 user equipment, and the influence on the air interface in physical layer is smaller. The embodiments of the disclosure can obtain a better interference coordination effect with a power adjustment method, wherein the resource reuse efficiency is further improved by employing a power control method for the users at a moderate interference condition, and the systematic frequency spectrum efficiency is improved. The interference coordination schemes of the disclosure are applicable to serve as eICIC schemes of LTE-A data channel.

As will be appreciated by one skilled in the art, the present disclosure may be embodied as a system, method or computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may be any computer-readable medium that is not a computer-readable storage medium and that can communicate, propagate, or transport a program for use by or in connection with an instruction execution system, apparatus, or device. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Figure 11 is a block diagram illustrating an example structure of a computer implementing the apparatus and method of the disclosure.

In Fig. 11, a central processing unit (CPU) 1101 perform various processes according to the program stored in the Read-Only Memory (ROM) 1102 or programs load from the storage section 1108 to the Random Access Memory (RAM) 1103. In the RAM 1103, store also data required when the CPU 1001 performs various processes.

CPU 1101, ROM 1102 and RAM 1103 are connected from one to another via bus 1104. Input/output interface 1105 is also connected to the bus 1104.

The following components are connected to the input/output interface 1105: input section 1106 (including keyboard, mouse, etc.); output section 1107 (including display, such as cathode ray tube (CRT), liquid crystal display (LCD), etc., and speakers and so on); storage section 1108 (including hard disc, etc.); and communication section 1109 (including network interface cards such as LAN cards, modems and so on). The communication section 1109 performs communication process via network like the internet.

According to requirements, drive 1110 is also connected to the input/output interface 1005. Removable medium 1111 such as disc, CD, magneto-optical disc, semiconductor memory, and so on is installed on the drive 1110 based on requirements, such that the computer program read out therefrom is installed in the storage section 1108 based on requirements.

In case of implementing the above processes by software, programs constituting the software are installed from a network like the Internet or from a storage medium like the removable medium 1111.

Those skilled in the art should be understood that such storage medium is not limited to the removable medium 1111 which is stored with programs and distributes separate from the method to provide a user with program as illustrated in Fig. 11. The example of the removable medium 1111 includes disc (including floppy disc (registered marks)), CD (including CD read only memory (CD-ROM) and digital versatile disc (DVD)), magneto-optical disc (including mini-disc (MD) (registered marks)) and semiconductor memory. Alternatively, the storage medium may be ROM 1102, or hard disc included in the storage section 1108 in which a program is stored and the program is distributed to a user with the method including the same.

The corresponding structures, materials, acts, and equivalents of all means or step plus function elements in the claims below are intended to include any structure, material, or act for performing the function in combination with other claimed elements as specifically claimed. The description of various embodiments of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

## Claims

1. A base station based on an orthogonal frequency division multiplexing scheme, comprising:
an interference evaluation unit which evaluates interference condition of respective physical resource units according to information fed back from a user equipment, wherein interference on a physical resource unit is evaluated at a moderate interference condition if the interference on the physical resource unit is greater than or equal to a first threshold and is less than or equal to a second threshold higher than the first threshold; and
an interference coordination request unit which transmits an interference coordination request to one or more predetermined base stations in response to at least the evaluation at the moderate interference condition, the interference coordination request including information indicative of the interference condition on the physical resource unit.

2. The base station according to claim 1, wherein the interference coordination request further includes adjustment information associated with the physical resource unit at the moderate interference condition, the adjustment information indicating an associated power adjustment amount which is a ratio between the power after adjustment and the power before adjustment, or a difference between the power before adjustment and the power after adjustment.

3. The base station according to claim 1 or 2, wherein the information indicative of the interference condition on the physical resource unit comprises a relative narrowband transmission power value, and the relative narrowband transmission power value of 2, 1 and 0 indicates a high interference condition, the moderate interference condition and a low interference condition respectively.

4. A base station based on an orthogonal frequency division multiplexing scheme, comprising:
a reception unit which receives interference coordination requests from one or more predetermined base stations, the interference coordination requests including information indicative of interference condition on respective physical resource units as evaluated by the base station which the interference coordination requests come from; and
a power adjustment unit which reduces the transmission power on a physical resource unit if the information indicates the physical resource unit at the moderate interference condition.

5. The base station according to claim 4, wherein the interference coordination requests further include adjustment information associated with the physical resource unit at the moderate interference condition, the adjustment information indicating an associated power adjustment amount which is a ratio between the power after adjustment and the power before adjustment, or a difference between the power before adjustment and the power after adjustment, and
the power adjustment unit is further configured to reduce the transmission power on the physical resource unit according to the associated power adjustment amount.

6. The base station according to claim 4 or 5, wherein the information indicative of the interference condition on the physical resource unit comprises a relative narrowband transmission power value, and the relative narrowband transmission power value of 2, 1 and 0 indicates a high interference condition, the moderate interference condition and a low interference condition respectively.

7. The base station according to claim 4 or 5, further comprising:
a resource schedule unit which, in case that the information indicates the physical resource unit at the high interference condition, makes a schedule so that the base station and the predetermined base stations which the corresponding interference coordination requests come from multiplex the indicated physical resource unit in a time-division manner.

8. The base station according to claim 7, wherein the resource schedule unit is further configured to allocate subframes mapped to the indicated physical resource unit according to an allocation proportion set in initializing the system configuration, wherein the allocation proportion is a ratio among the number of the subframes allocated to the base station and the numbers of the subframes allocated to the predetermined base stations which the corresponding interference coordination requests come from.

9. A wireless communication system comprising at least one user equipment and at least one base station according to one of claims 1 to 8.

10. The wireless communication system according to claim 9, wherein the user equipment comprising a transmitter configured to transmit information regarding the interference.

11. An interference coordination method in a base station based on an orthogonal frequency division multiplexing scheme, comprising:
evaluating interference condition of respective physical resource units according to information fed back from a user equipment, wherein interference on a physical resource unit is evaluated at a moderate interference condition if the interference on the physical resource unit is greater than or equal to a first threshold and is less than or equal to a second threshold higher than the first threshold; and
transmitting an interference coordination request to one or more predetermined base stations in response to at least the evaluation at the moderate interference condition, the interference coordination request including information indicative of the interference condition on the physical resource unit.

12. The interference coordination method according to claim 11, wherein the interference coordination request further includes adjustment information associated with the physical resource unit at the moderate interference condition, the adjustment information indicating an associated power adjustment amount which is a ratio between the power after adjustment and the power before adjustment, or a difference between the power before adjustment and the power after adjustment.

13. The interference coordination method according to claim 11 or 12, wherein the information indicative of the interference condition on the physical resource unit comprises a relative narrowband transmission power value, and the relative narrowband transmission power value of 2, 1 and 0 indicates a high interference condition, the moderate interference condition and a low interference condition respectively.

14. The interference coordination method according to claim 11 or 12, further comprising transmitting, by the user equipment, information regarding the interference.

15. An interference coordination method in a base station based on an orthogonal frequency division multiplexing scheme, comprising:
receiving interference coordination requests from one or more predetermined base stations, the interference coordination requests including information indicative of interference condition on respective physical resource units as evaluated by the base station which the interference coordination requests come from; and
reducing the transmission power on a physical resource unit if the information indicates the physical resource unit at the moderate interference condition.

16. The interference coordination method according to claim 15, wherein the interference coordination requests further include adjustment information associated with the physical resource unit at the moderate interference condition, the adjustment information indicating an associated power adjustment amount which is a ratio between the power after adjustment and the power before adjustment, or a difference between the power before adjustment and the power after adjustment, and
the reducing comprises reducing the transmission power on the physical resource unit according to the associated power adjustment amount.

17. The interference coordination method according to claim 15 or 16, wherein the information indicative of the interference condition on the physical resource unit comprises a relative narrowband transmission power value, and the relative narrowband transmission power value of 2, 1 and 0 indicates a high interference condition, the moderate interference condition and a low interference condition respectively.

18. The interference coordination method according to claim 15 or 16, further comprising:
in case that the information indicates the physical resource unit on the high interference condition, making a schedule so that the base station and the predetermined base stations which the corresponding interference coordination requests come from multiplex the indicated physical resource unit in a time-division manner.

19. The interference coordination method according to claim 18, wherein making the schedule comprises allocating subframes mapped to the indicated physical resource unit according to an allocation proportion set in initializing the system configuration, wherein the allocation proportion is a ratio among the number of the subframes allocated to the base station and the numbers of the subframes allocated to the predetermined base stations which the corresponding interference coordination requests come from.
